# EUROPÄISCHE PATENTSCHRIFT

(11) **EP 1 940 670 B1**
(45) Veröffentlichungstag und Bekanntmachung des Hinweises auf die Patenterteilung: **16.12.2009**
(21) Anmeldenummer: 06804348.8
(22) Anmeldetag: 12.10.2006
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION CONÇUE POUR UN VEHICULE AUTOMOBILE

(30) Priorität: 28.10.2005 DE 102005052123
(43) Veröffentlichungstag der Anmeldung: 09.07.2008
(73) Patentinhaber: ThyssenKrupp Presta Aktiengesellschaft, 9492 Eschen (LI)
(72) Erfinder: WAIBEL, Gerhard, A-6858 Bildstein (AT); ALLGÄUER, Rene, A-6844 Altach (AT); AUER, Maximilian, A-6820 Frastanz (AT); JENNY, Martin, A-6800 Feldkirch (AT)
(74) Vertreter: Hofmann, Ralf U.
(86) Internationale Anmeldenummer: PCT/AT2006/000420
(87) Internationale Veröffentlichungsnummer: WO 2007/048153

(56) Entgegenhaltungen:
- EP-A- 0 849 141
- EP-A- 1 705 098
- EP-A2- 1 093 990
- EP-A2- 1 433 687
- EP-A2- 1 464 560
- US-A- 5 722 299

## Beschreibung

Die Erfindung betrifft eine Lenksäule für ein Kraftfahrzeug, die zumindest in ihrer Längsrichtung verstellbar ist, umfassend eine Trageinheit, die mit dem Chassis des Kraftfahrzeugs verbindbar ist, eine Stelleinheit und einen Spannmechanismus, in dessen geöffnetem Zustand die Stelleinheit gegenüber der Trageinheit zumindest in die Längsrichtung der Lenksäule verstellbar ist und in dessen geschlossenem Zustand die eingestellte Position der Stelleinheit gegenüber der Trageinheit festgestellt ist und der einen Spannbolzen und mindestens ein Arretierelement, das mit mindestens einem Feststellelement zusammenwirkt, umfasst, wobei mindestens ein Arretierelement beim Schließen des Spannmechanismus in achsialer Richtung des Spannbolzens gegenüber der Trageinheit verschoben und mit einem mit der Stelleinheit verbundenen Feststellelement verspannt wird und mindestens ein Feststellelement derart mit der Stelleinheit verbunden ist, dass es im Normalbetrieb in Längsrichtung der Lenksäule unverschiebbar gegenüber der Stelleinheit gehalten ist und im Crashfall gegenüber der Stelleinheit unter Energieabsorption verschiebbar ist.

Verstellbare Lenksäulen, die zur Anpassung der Position des Lenkrades an die Sitzposition des Fahrers dienen, sind in unterschiedlichen Ausführungsformen bekannt. Neben verstellbaren Lenksäulen, die nur in die Längen- oder Höhen- bzw. Neigungsrichtung verstellbar sind, sind sowohl in die Längen- als auch Höhen- bzw. Neigungsrichtung verstellbare Lenksäulen bekannt.

Verstellbare Lenksäulen, bei denen die eingestellte Position mittels eines Spannmechanismus fixiert wird, wobei der Spannmechanismus reibschlüssig und/oder formschlüssig zusammenwirkende Feststellelemente miteinander in Eingriff hält, sind beispielsweise aus der EP 0 802 104 B1, EP 0 836 981 B1, US 5,722,299 A oder EP 1 382 509 A1 bekannt. Bei der verstellbaren Lenksäule der EP 0 802 104 B1 werden im geschlossenen Zustand des Spannmechanismus Lamellenpakete miteinander verspannt, von denen eines an der Stelleinheit bzw. Manteleinheit und das andere an der Trageinheit angebracht ist. Bei der Einrichtung der EP 0 836 981 B1 werden im geschlossenen Zustand des Spannmechanismus Verzahnungen miteinander in Eingriff gebracht, die eine Verstellung der Lenksäule blockieren. Die Trageinheit weist hierbei nur einen Schenkel auf einer Seite der Stelleinheit auf, gegen welchen die Stelleinheit im geschlossenen Zustand des Spannmechanismus verspannt wird. Aus der US 5,722,299 A ist insbesondere aus den Ausführungsbeispielen gemäß Fig. 28 bis 39 ebenfalls ein Spannmechanismus bekannt, dessen Feststellelemente formschlüssig über Verzahnungen zusammenwirken. Die Trageinheit weist hier beidseitig der Stelleinheit liegende Seitenwangen auf, die vom Spannbolzen des Spannmechanismus durch Öffnungen durchsetzt werden. Bei der Lenksäule der EP 1 382 509 A1 sind als zusammenwirkende Feststellelemente Rastbolzen und Bohrungen vorhanden, in welche die Rastbolzen eingreifen können.

Bekannt ist es weiters, die Lenksäule eines Kraftfahrzeugs über energieverzehrende Mittel mit dem Chassis des Kraftfahrzeugs zu verbinden. Bei verstellbaren Lenksäulen ist hierbei üblicherweise die Trageinheit in energieverzehrender Weise verschiebbar mit einem am Chassis des Kraftfahrzeugs angebrachten Chassisteil verbunden. Eine derartige Konstruktion zeigt beispielsweise die US 5,517,877 A. Bei nicht verstellbaren Lenksäulen ist das Mantelrohr selbst in energieverzehrender Weise verschiebbar mit dem Chassis des Kraftfahrzeugs verbunden, wie dies beispielsweise in der US 5,082,311 A gezeigt ist. Die energieabsorbierende Einrichtung wird bei dieser Lenksäule von am Mantelrohr angebrachten Haltebügeln gebildet, welche in Längsrichtung des Mantelrohrs verlaufende Langlöcher aufweisen, die von einer Schraube durchsetzt werden, welche sich weiters durch eine Bohrung in einem chassisfesten Teil erstreckt. Im Crashfall wird das Mantelrohr zusammen mit den am Mantelrohr angebrachten Haltebügeln gegenüber den Schrauben verschoben, wobei diese die Langlöcher unter Absorption von Bewegungsenergie des Mantelrohrs aufweiten.

Eine Lenksäule der eingangs genannten Art ist weiters aus der EP 0 849 141 A1 bekannt. Am Mantelrohr sind Montageflansche festgelegt, die einen in Längsrichtung des Mantelrohrs verlaufenden Schlitz begrenzen. Ein Feststellelement für die Teststellung der Längsverschiebung der Lenksäule ist zwischen diesen Montageflanschen in Längsrichtung der Lenksäule verschiebbar geführt. Ein Spannbolzen durchsetzt eine Öffnung in einem auf einer Seite des Mantelrohrs angeordneten Seitenschenkel einer chassisfesten Trageinheit und ein in Längsrichtung der Lenksäule verlaufendes Langloch im Feststellelement. Ein Spannmechanismus fixiert in seinem geschlossenen Zustand die eingestellte Position der Lenksäule. Hierbei verspannt er die dem Seitenschenkel der Trageinheit zugewandte Seitenfläche des Feststellelements mit der diesem Feststellelement zugewandten Seitenfläche des Seitenschenkels der Trageinheit, der somit ein weiteres Feststellelement zur Festlegung der Längsverstellung der Lenksäule bildet. Weiters werden die L-förmigen, am Mantelrohr angebrachten Montageflansche im geschlossenen Zustand des Spannmechanismus durch die vom Spannmechanismus aufgebrachte Spannkraft zusätzlich in Schlitzen des Feststellelements, welches an den Montageflanschen in Längsrichtung verschiebbar geführt ist, geklemmt. Im Crashfall kann sich das Feststellelement gegenüber den Montageflanschen unter Überwindung der zwischen diesen Teilen wirkenden Reibung verschieben. Obwohl diese Konstruktion eine kompakte Bauweise ermöglicht, ist es an dieser Einrichtung u.a. nachteilige, dass das Ausmaß der Energieabsorption zwischen den Montageflanschen des Mantelrohrs und dem Feststellelement von der Spannkraft des Spannmechanismus abhängt. Diese Spannkraft kann sich im Laufe der Zeit ändern. Die Ausbildung eines vorgegebenen Kraft-Weg-Diagramms für die Energieabsorption der Crashenergie ist nicht in zufriedenstellender Weise möglich.
Aufgabe der Erfindung ist es, eine Lenksäule der genannten Art bereitzustellen, bei der im Normalbetrieb eine zuverlässige Feststellung der eingestellten Position der Lenksäule ermöglicht wird, wobei Schwingungen der Stelleinheit gegenüber der Trageinheit vermieden werden und bei der die Energieabsorption im Crashfall ausreichend genau vorgegeben werden kann.

Erfindungsgemäß gelingt dies durch bei einer Lenksäule der eingangs genannten Art dadurch, dass die Trageinheit beidseitig der Stelleinheit liegende Seitenwangen aufweist, die vom Spannbolzen durch Öffnungen durchsetzt werden, und mindestens ein Arretierelement die Seitenwange der Trageinheit und/oder einen Seitenschenkel einer Zwischeneinheit, die zwischen den Seitenwangen der Trageinheit und der Stelleinheit angeordnet ist, durch eine Öffnung durchsetzt und in der Öffnung der entsprechenden Seitenwange der Trageinheit und/oder in der Öffnung des entsprechenden Seitenschenkels der Zwischeneinheit in Längsrichtung der Lenksäule unverschiebbar gehalten ist

In einer bevorzugten Ausführungsform der Erfindung weist mindestens ein Feststellelement zumindest einen auf der zur Stelleinheit gerichteten Seite angebrachten Bolzen auf, der in einem Langloch in der Stelleinheit oder in einem an dieser angebrachten Energleabsorptionsteil geführt ist und der dieses Langloch bei einer im Crashfall in Längsrichtung der Lenksäule gegenüber dem zweiten Feststellelement erfolgenden Verschiebung der Stelleinheit aufweitet

Eine erfindungsgemäße Lenksäule ermöglicht eine Kompaktbauweise bei einem gut definierten Energieabsorptionsverhalten im Crashfall. Weiters kann eine hohe Stabilität im geschlossenen Zustand des Spannmechanismus, beispielsweise gegenüber Schwingungen erreicht werden.

In einer vorteilhaften Ausführungsform der Erfindung greifen ein oder mehrere Arretierelemente und ein oder mehrere Feststellelemente der Längsverstellung im geschlossenen Zustand des Spannmechanismus formschlüssig ineinander ein, vorzugsweise über an diesen Feststellelemente angeordneten Verzahnungen. Es wird dadurch eine hohe Haltekraft gegenüber einer ungewollten Verstellung zwischen den Feststellelementen, und zwar sowohl für den Normalbetrieb als auch für den Crashfall erreicht.

Wenn im Rahmen dieser Schrift von einem "Normalbetrieb" die Rede ist, so liegt dieser dann vor, wenn die auf die Lenksäule einwirkenden Kräfte einen vorgegebenen Grenzwert (in eine betreffende Verstellrichtung) nicht überschreiten, während im "Crashfall° die einwirkenden Kräfte oberhalb dieses Grenzwerts liegen.

Bevorzugt ist es, dass eine erfindungsgemäße Lenksäule nicht nur in die Längsrichtung verstellbar ist, sondern auch in der Neigung bzw. Höhe verstellbar ist, wobei im geschlossenen Zustand des Spannmechanismus erste und zweite Höhenfeststellelemente miteinander verspannt werden, die die Neigungs- bzw. Höhenverstellung feststellen. Diese Höhenfeststellelemente wirken vorzugsweise wiederum formschlüssig zusammen.

In einer vorteilhaften Ausführungsform der Erfindung ist eine Einrichtung vorhanden, mittels der im Crashfall, beispielsweise nach einer vorbestimmten Zeit oder einer vorbestimmten Verschiebestrecke, mindestens eines der Arretierelemente für die Längenverstellung außer Eingriff des zugeordneten Feststellelements bringbar ist. Diese Einrichtung kann hierbei beispielsweise ein pyrotechnisches Element oder ein elektromagnetisch oder durch eine Verschiebung im Crashfall mechanisch betätigtes Element zum Zurückziehen des Arretierelements umfassen. Alternativ oder in Kombination kann auch vorgesehen sein, ein oder mehrere Arretierelemente zusätzlich mit jeweiligen Feststellelementen in Eingriff zu bringen.

In einem weiteren, unabhängigen Aspekt, besteht die Aufgabe der Erfindung bei einer zumindest in die Höhen- bzw. Neigungsrichtung verstellbaren Lenksäule darin, im Crashfall einen Weg von der Motorseite her aufzunehmen. Erfindungsgemäß gelingt dies bei einer Lenksäule, die durch Verschwenkung um eine Schwenkachse zumindest höhen- bzw. neigungsverstellbar ist, wobei die Schwenkachse durch mindestens einen Schwenkbolzen definiert wird dadurch, dass der Schwenkbolzen in mindestens einem Langloch verschiebbar geführt ist.

Diese Verschiebung des Schwenkbolzens im Langloch kann hierbei in einer vorteilhaften Ausführungsform unter Energieabsorption erfolgen, insbesondere durch Reibung und/oder Umformung.

Weitere Vorteile und Einzelheiten der Erfindung werden im Folgenden anhand der beiliegenden Zeichnung erläutert. In dieser zeigen:
- Fig. 1: eine Schrägsicht des an das Lenkrad anschließenden Abschnitts einer erfindungsge- mäßen Lenksäule gemäß einer ersten Ausführungsform;
- Fig. 2: und Fig. 3 auseinandergezogene Darstellungen von Teilen des Spannmechanismus der Lenksäule in Schrägsichten aus verschiedenen Blickrichtungen;
- Fig. 4: eine Schrägsicht der Lenksäule im Zustand nach einem Crash;
- Fig. 5: und Fig. 6 Seitenansichten der Lenksäule vor und nach dem Crash;
- Fig. 7: und Fig. 8 Schrägsichten des Energieabsorptionsteils und des mit ihm verbundenen Feststellelements von der Seite der Stelleinheit aus gesehen, vor und nach einem Crash;
- Fig. 9: und Fig. 10 Schrägsichten einer zweiten Ausführungsvariante der Erfindung aus ver- schiedenen Blickrichtungen, Teile des Klemmmechanismus jeweils auseinandergezo- gen dargestellt;
- Fig.11: eine Schrägsicht einer weiteren Ausführungsform einer erfindungsgemäßen Lenksäule.

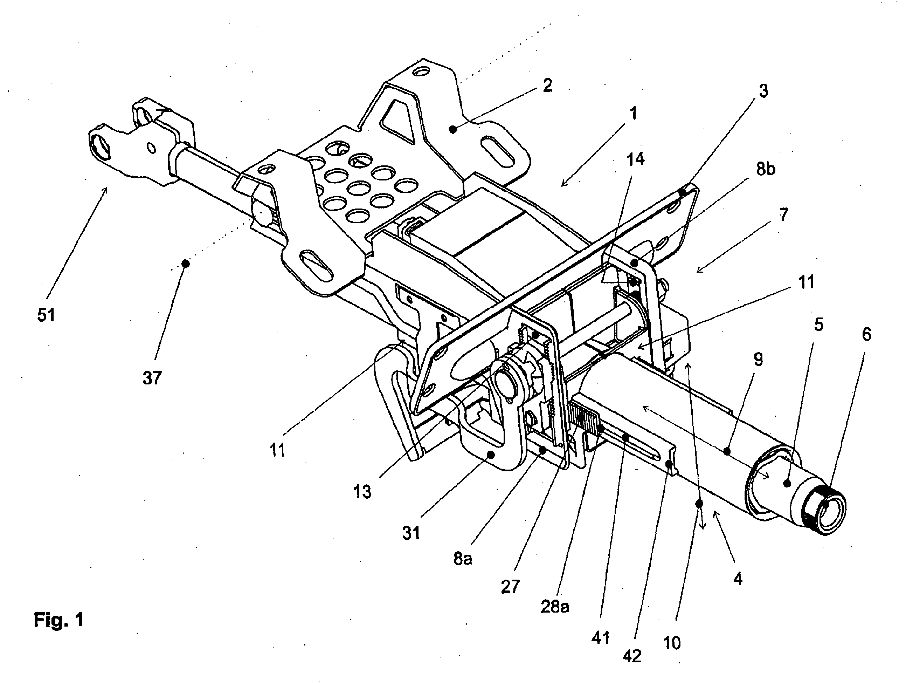

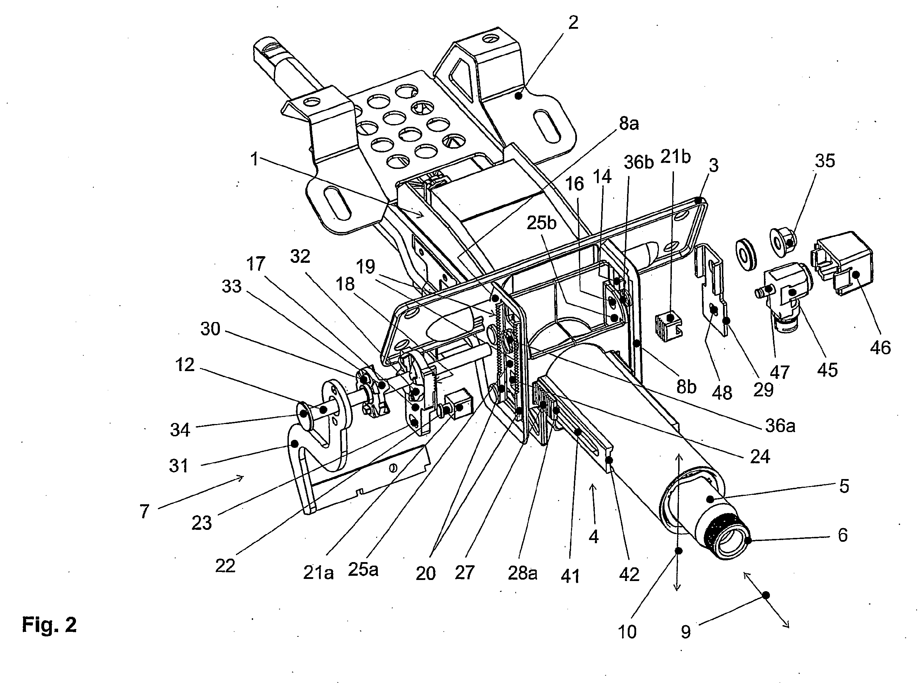

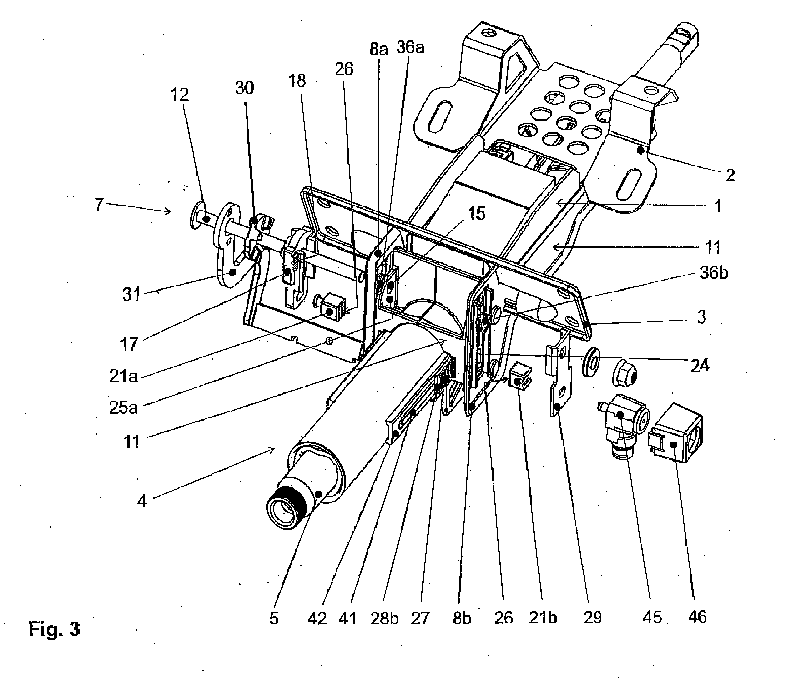

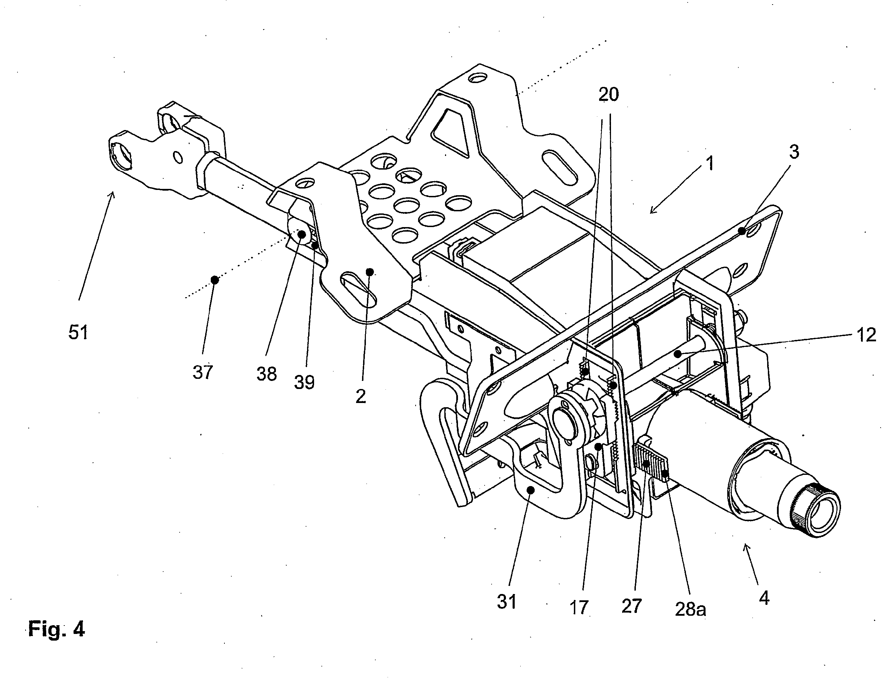

Eine erste Ausführungsform einer erfindungsgemäßen Lenksäule ist in den Fig. 1 bis 8 dargestellt. Die Lenksäule umfasst eine Trageinheit 1, die mit dem Chassis des Kraftfahrzeugs verbindbar ist und die in diesem Ausführungsbeispiel erste und zweite miteinander verbundene Konsolenteile 2, 3 aufweist.

Eine Stelleinheit 4, die in Form eines Mantelrohrs ausgebildet ist und einen Abschnitt der Lenkspindel 5 drehbar lagert, ist gegenüber der Trageinheit zur Anpassung der Position des in den Figuren nicht dargestellten, am Ende 6 der Lenkspindel 5 anbringbaren Lenkrades an die Sitzposition des Fahrers gegenüber der Trageinheit 1 verstellbar, wenn sich ein weiter unten genauer beschriebener Spannmechanismus 7 in seinem geöffneten Zustand befindet.

Die Stelleinheit 4 ist zwischen Seitenwagen 8a, 8b des Konsolenteils 3 der Trageinheit 1 angeordnet.

Die Stelleinheit 4 ist im gezeigten Ausführungsbeispiel sowohl in Längsrichtung 9 der Lenksäule als auch in die Verstellrichtung 10 zur Neigungs- bzw. Höhenverstellung der Lenksäule verstellbar. Hierbei ist zwischen den Seitenwangen 8a, 8b der Trageinheit 1 und der Stelleinheit 4 eine Zwischeneinheit 11 angeordnet, die die Stelleinheit 4 ringförmig umgibt. Diese Zwischeneinheit 11 ist in die der Höhen- bzw. Neigungsverstellung entsprechende Verstellrichtung 10 gegenüber der Trageinheit 1 verschiebbar und gegenüber der Stelleinheit 4 in diese Verstellrichtung 10 unverschiebbar. In Längsrichtung 9 der Lenksäule ist demgegenüber die Zwischeneinheit 11 mit der Trageinheit 1 unverschiebbar verbunden und die Stelleinheit 4 verschiebbar gegenüber der Zwischeneinheit 11 gelagert.

Zur Fixierung der eingestellten Position der Lenksäule dient der Spannmechanismus 7, der einen quer zur Lenkspindel 5, insbesondere rechtwinklig zur Längsrichtung 9 der Lenksäule, verlaufenden Spannbolzen 12 umfasst, der Öffnungen 13, 14 in den Seitenwangen 8a, 8b und Öffnungen 15, 16 in Seitenschenkeln 25a, 25b der Zwischeneinheit 11 durchsetzt. Die Öffnungen 13, 14 sind in Form von Langlöchern ausgebildet, die sich in die Verstellrichtung 10 erstrecken. Die Öffnungen 15, 16 in der Zwischeneinheit 11 halten den Spannbolzen 12 bezogen auf die Verstellrichtung 10 unverschiebbar (abgesehen von einem Spiel für die Gleitführung des Spannbolzens) gegenüber der Zwischeneinheit 11.

Auf dem Spannbolzen 12 ist ein Höhenarretierelement 17 angeordnet, das auf der zur benachbarten Seitenwange 8 der Trageinheit 1 gewandten Seite beiderseits des Spannbolzens 12 Verzahnungen 18 aufweist. Diese wirken im geschlossenen Zustand des Spannmechanismus 7 mit Verzahnungen 19 an beidseitig der Öffnung 13 an der Seitenwange 8 angeordneten Zahnleisten zusammen, welche ein Höhenfeststellelement 20 bilden. Die Verzahnungen 18, 19 erstrecken sich in die Verstellrichtung 10, im gezeigten Ausführungsbeispiel geradlinig, wobei ein gebogener Verlauf prinzipiell ebenfalls denkbar und möglich ist.

Am ersten Höhenfeststellelement 17 ist ein Klemmstein angebracht, der ein Arretierelement 21a zur Fixierung der Einstellung der Lenksäule in die Längsrichtung 9 im geschlossenen Zustand des Spannmechanismus 7 bildet. Das Arretierelement 21 a ist im Beispiel mittels eines an ihm angebrachten Bolzens 22, der eine Öffnung 23 im Höhenarretierelement 17 durchsetzt, an diesem befestigt.

Das Arretierelement 21 a liegt als Ganzes auf einer Seite des Spannbolzens 12 (weist also nicht beidseitig des Spannbolzens liegende Abschnitte auf) und durchsetzt die Öffnung 13 in der Seitenwange 8 sowie eine in Form einer Fensterausnehmung ausgebildete Öffnung 24 in einem Seitenschenkel 25a der Zwischeneinheit 11. An den Rändern dieser Öffnung 24 im Seitenschenkel 25a der Zwischeneinheit 11 ist das Arretierelement 21 a gegen eine Verschiebung in Längsrichtung 9 der Lenksäule abgestützt.

Auf seiner der Stelleinheit 4 zugewandten Seite besitzt das Arretierelement 21 a eine Verzahnung 26, die im geschlossenen Zustand des Spannmechanismus 7 in eine Verzahnung 27 eines Feststellelements 28a eingreift, welches mit der Stelleinheit 4 verbunden ist. Im Beispiel erfolgt diese Verbindung des Feststellelements 28a mit der Stelleinheit 4 im Bereich einer Ebene, die durch die Längsachse der Lenkspindel 5 verläuft und rechtwinklig zu einer durch die Längsachse der Lenkspindel 5 verlaufenden Vertikalebene steht. Alternativ kann auch vorgesehen sein, diese Verbindung des Feststellelements 28a mit der Stelleinheit 4 im Bereich einer Ebene anzuordnen, die parallel versetzt zur Längsachse der Lenkspindel 5 verläuft. Die Lage in Bezug auf die Längsachse der Lenkspindel 5 kann problemlos den konstruktiven Erfordernissen angepasst werden.

Die Ebene, im Bereich derer die Verbindung des Feststellelements 28a mit der Stelleinheit 4 erfolgt, ist bevorzugterweise parallel zur Achse des Spannbolzens 12 und versetzt zu diesem (d. h. der Spannbolzen 12 liegt nicht innerhalb dieser Ebene).

Das Höhenarretierelement 17 ist gegenüber der Seitenwange 8a in die Verstellrichtung 10 verschiebbar geführt und hierbei gegen eine Verdrehung um die Achse des Spannbolzens 12 gesichert.

Auf der gegenüberliegenden Seite der Stelleinheit 4 ist auf dem Spannbolzen 12 eine Verbindungsplatte 29 angeordnet, die in die Verstellrichtung 90 verschiebbar an der Seitenwange 8b geführt ist und hierbei gegen eine Verdrehung um die Achse des Spannbolzens 12 gesichert ist. Mit der Verbindungsplatte 29 ist ein Klemmstein verbunden, der in dieser Ausführungsform ein weiteres Arretierelement 21 b für die Fixierung der Längsverstellung der Lenksäule darstellt. Wie das erste Arretierelement 21 a liegt das weitere Arretierelement 21 b als Ganzes auf einer Seite des Spannbolzens 12 und ragt durch die Öffnung 14 in der Seitenwange 8b und durch eine in Form einer Fensterausnehmung ausgebildete Öffnung 24 im Seitenschenkel 25b der Zwischeneinheit 11, in welcher es gegen eine Verschiebung in Längsrichtung 9 der Lenksäule gesichert ist. Die Verzahnung 26 des weiteren Arretierelements 21 b wirkt im geschlossenen Zustand des Spannmechanismus 7 wiederum mit der Verzahnung 27 eines weiteren Feststellelements 28b zusammen, welches mit der Stelleinheit 4 verbunden ist.

Die Verbindung des weiteren Arretierelements 21 b mit der Verbindungsplatte 29 wird weiter unten noch genauer erläutert.

Der Spannmechanismus 7 umfasst weiters ein auf dem Spannbolzen 12 drehbar angeordnetes Spannglied 30, an dem ein Spannhebel 31 angebracht ist, von welchem es um die Längsachse des Spannbolzens 12 verdrehbar ist. Mit dem Spannglied 30 wirkt die dem Spannglied zugewandte Seitenfläche des ersten Höhenfeststellelements 17 zusammen. Hierbei besitzt diese Seitenfläche des ersten Höhenfeststellelements 17 Rampen bzw. Schrägflächen 32, die mit Nockenfortsätzen 33 des Spannglieds 30 zusammenwirken. Alternativ können auch in Kurvenbahnen geführte Wälzkörper oder auch andere allgemein bekannte Spannmechanismen die Spannfunktion übernehmen.

Beim Verdrehen des Spannglieds 30 mittels des Spannhebels 31 zwischen der Offenstellung des Spannglieds 30 und der Schließstellung des Spannglieds 30 gleiten die Nockenfortsätze 33 entlang der Schrägflächen 32 ab, wobei das in Form eines vergrößerten Kopfs ausgebildete Endstück 34 des Spannbolzens 12 in die von der Seitenwange 8 der Trageinheit 1 weg gerichtete Richtung verschoben wird, sodass das in Form einer Mutter ausgebildete gegenüberliegende Endstück 35 des Spannbolzens 12 in Richtung zur Seitenwange 8b verschoben wird, und das erste Höhenfeststellelement 17 in achsialer Richtung des Spannbolzens 12 in Richtung zur Seitenwange 8a verschoben wird. Das erste Höhenfeststellelement 17 nimmt hierbei das Arretierelement 21 a in achsialer Richtung des Spannbolzens 12 mit und das Endstück 35 nimmt hierbei die Verbindungsplatte 29 und somit das weitere Arretierelement 21 b in achsialer Richtung des Spannbolzens 12 mit. Hierdurch gelangen die vorerst voneinander beabstandeten Verzahnungen 18, des Höhenarretierelements 17 mit den Verzahnungen 19 des Höhenfeststellelementes 20 sowie die Verzahnungen der Arretierelemente 21 a, 21 b mit den Verzahnungen der Feststellelemente 28a, 28b miteinander in Eingriff.

Die Kraftübertragung bei einer im geschlossenen Zustand des Spannmechanismus 7 in Längsrichtung der Lenksäule auf die Stelleinheit 4 wirkenden Kraft wird vom mindestens einem Feststellelement 28a, 28b auf das mindestens eine Arretierelement 21 a, 21 b und von diesem über den Rand der Öffnung 24 im Seitenschenkel 25a, 25b der Zwischeneinheit 11 und über diese auf die Trageinheit 1 übertragen.

Wenn der Spannmechanismus 7 ausgehend von seinem geschlossenen Zustand durch Verschwenken des Spannhebels 31 in seinen geöffneten Zustand gebracht wird, so distanzieren die zwischen den Seitenschenkeln 25a, 25b der Zwischeneinheit 11 und einerseits dem ersten Höhenfeststellelement 17, andererseits der Verbindungsplatte 29 angeordneten Federn 36a, 36b die Verzahnungen 18, 19 bzw. 26, 27 und die Position der Lenksäule ist verstellbar.

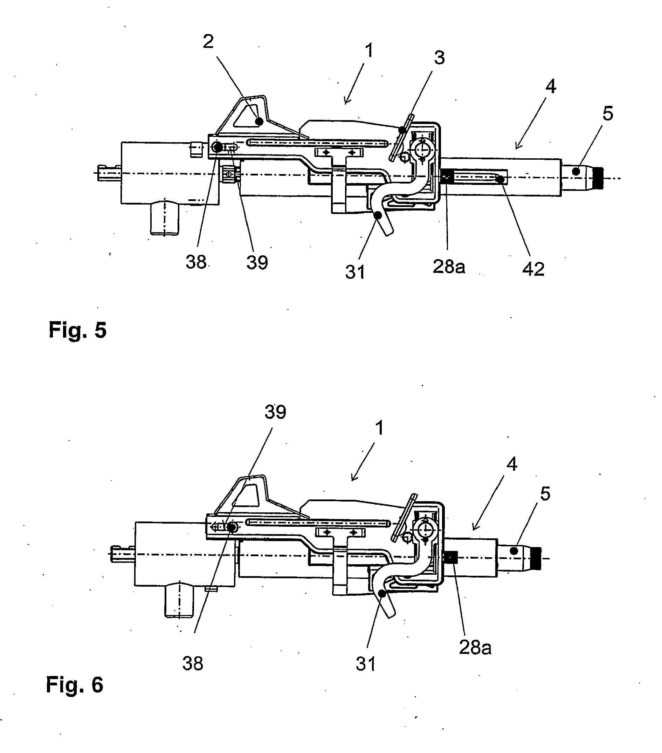

Die Höhen- bzw. Neigungsverstellung der Lenksäule erfolgt durch eine Verschwenkung der Stelleinheit 4 gegenüber der Trageinheit 1 um die Schwenkachse 37. Hierbei ist die Schwenkachse durch mit der Zwischeneinheit 11 verbundene Schwenkbolzen 38 festgelegt. In den dargestellten Ausführungsbeispielen sind die Schwenkbolzen 38 in zwei Langlöchern 39, die an der Trageinheit 1 angeordnet sind, und sich in Längsrichtung 9 der Lenksäule erstrecken, geführt, um einen zusätzlichen Verschiebeweg in Längsrichtung 9 der Lenksäule für die Stelleinheit 4 gegenüber der Trageinheit 1 im Falle eines Crashs darzustellen. Im Falle eines Crashs kann sich die Schwenkachse (37) entsprechend entlang des mindestens einen Langlochs (39) verschieben. Bevorzugt wird dabei Energie, beispielsweise durch Reibung und/oder Umformung, absorbiert. Dies ist an der Verschiebung des Schwenkbolzens in der Fig. 6 veranschaulicht. Diese Ausbildung ist besonders vorteilhaft zur Aufnahme einer Stirnwandintrusion.

Die Erfindung ist aber genauso ausführbar, wenn die Schwenkbolzen 36 nicht längsverschiebbar, sondern nur ausschließlich verschwenkbar, beispielsweise in kreisrunden Aussparungen, an der Trageinheit 1 befestigt wären.

Die Anordnung der Schwenkbolzen 38 und der Langlöcher 39 könnte auch vertauscht sein. Es könnte beispielsweise auch ein durchgehender Schwenkbolzen vorhanden sein, der in zwei Langlöchern verschiebbar geführt ist.

Bei der Verstellung entlang der Längsrichtung 9 und/oder der Höhe- bzw. Neigung der Lenksäule wird in den Ausführungsbeispielen die Position des Universalgelenks 51 relativ zur Karosserie bzw. der Konsole 2,3 verändert. Es sind jedoch auch alternative Konstruktionen denkbar und möglich, bei denen die Verschwenkung der Stelleinheit 4 im Universalgelenk 51 erfolgt. In diesem Fall kann das Universalgelenk gegenüber der Karosserie und/oder der Konsole 2, 3, abgesehen von der Drehung um die eigene Achse, entweder eine unveränderliche Position einnehmen oder nur im Fall der Verstellung entlang der Längsrichtung 9 der Lenksäule seine Position entlang Längsrichtung 9 verändern.

An den zur Stelleinheit 4 gerichteten Seiten der Feststellelemente 28a, 28b ist jeweils ein Bolzen 40 angebracht, der in ein Langloch 41 eines Energieabsorptionsteils 42 ragt, welches an der Stelleinheit 4 festgelegt ist. Das Langloch 41 erstreckt sich in die Längsrichtung 9 der Lenksäule. Im Bereich seines vom lenkradseitigen Ende 6 der Lenkspindel 5 abgewandten Endes weist das Langloch 41 Verbreiterungen 43 auf, die durch muldenförmige Vertiefungen in den Längsrändern des Langlochs 41 gebildet werden. Im Normalbetrieb befindet sich der in das jeweilige Langloch 41 eingreifende Bolzen 40 im Bereich des lenkradfernen Endes des Langlochs 41, wobei seitliche Verbreiterungen 44 des Bolzens 40 in die Verbreiterungen 43 des Langlochs 41 ragen. Eine Verschiebung des Bolzens 40 gegenüber dem Langloch 41 ist somit im Normalbetrieb durch diese formschlüssige Verbindung zwischen dem Bolzen 40 und dem Energieabsorptionsteii 42 blockiert

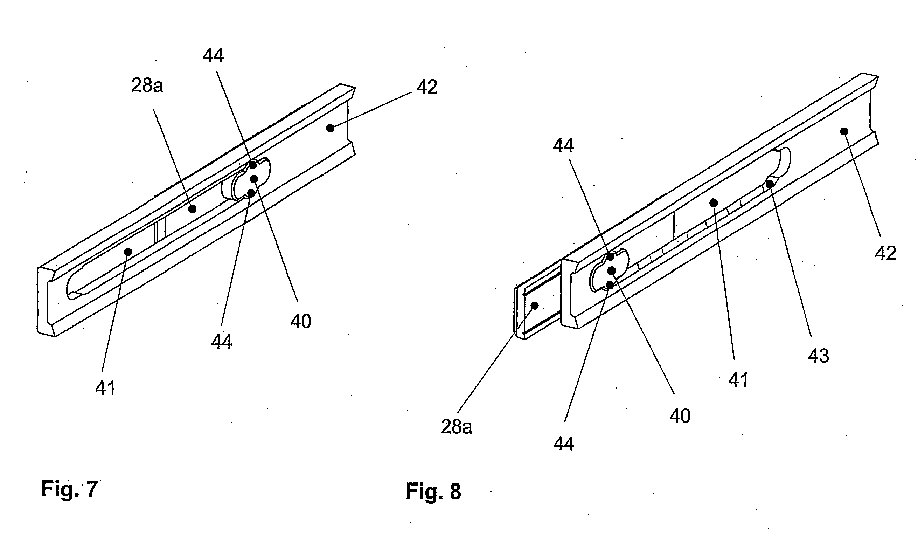

Im Crashfall deformieren die Bolzen 40 die Langlöcher 41, wobei die Verbreiterungen 44 der Bolzen 40 die Langlöcher 41 aufweiten, während sich die Bolzen 40 in den Langlöchern 41 in Richtung zum lenkradseitigen Ende der Langlöcher 41 verschieben. Fig. 8 zeigt den Endzustand, in welchem der jeweilige Bolzen 40 das lenkradseitige Ende des Langlochs 41 erreicht

Durch eine geeignete Anpassung der Breiten der Langlöcher 41 über ihre Ausdehnung kann die Verschiebekraft der Feststellelemente 28a, 28b über ihren Verschiebeweg auf jeweils gewünschte Werte eingestellt werden, um ein vorgegebenes Kraft-Weg-Diagramm zu erreichen.

Unterschiedliche Modifikationen der Formen der Bolzen 40 und der Konturen der Langlöcher 41 sind denkbar und möglich. Beispielsweise könnten die Bolzen 40 auch mit einem kreisrunden Querschnitt ausgebildet sein. Die Bolzen können auch zusätzlich klemmend mit den Energieabsorptionsteilen verbunden sein.

Alternativ sind jedoch auch andere Absorptionsmechanismen, wie beispielsweise eine Biegelasche und/oder eine Reißlasche denkbar und möglich.

Der Vorteil der erfindungsgemäßen Lösung besteht darin, dass die Größe der Energieabsorption im geschlossenen des Spannmechanismus von der aufgebrachten Schließspannung im Spannmechanismus 7 sehr stark entkoppelt ist, obgleich das System kompakt aufgebaut ist. Der die Öffnungen 13, 14 in den Seitenwangen 8a, 8b durchsetzende Spannbolzen 12 bringt mindestens ein Arretierelement 21 a mit einem Feststellelement 28a in Eingriff. Die aufgebrachte Spannung dient nur zur Sicherung des Eingriffs, der bevorzugt ein Formschluss ist, während die Energieabsorption zwischen dem Feststellelement 28a und dem Energieabsorptionsteil 42 erfolgt. Gleichzeitig gestattet die erfindungsgemäße Lösung eine problemlose Integration einer zusätzlichen Höhen- bzw. Neigungsverstellung der Lenksäule.

Das weitere Arretierelement 21 b ist mit der Verbindungsplatte 29 über ein pyrotechnisches Element 45 verbunden. Das pyrotechnische Element 45 ist mittels eines Befestigungsteils 46 an der Verbindungsplatte 29 angebracht, wobei das Befestigungsteil 46 beispielsweise an den Rändern der Verbindungsplatte 29 eingeschnappt ist. Ein Haltebolzen 47 durchsetzt eine Bohrung 48 der Verbindungsplatte 29 und an diesem Haltebolzen 47 ist das weitere Arretierelement 21 b festgelegt.

Im Normalbetrieb ist das weitere Arretierelement 21 b wie beschrieben mit dem weiteren Feststellelement 28b im Eingriff, wenn sich der Spannmechanismus 7 in seinem geschlossenen Zustand befindet. Im Crashfall kann das weitere Arretierelement 21b mittels des pyrotechnischen Elements 45 außer Eingriff des weiteren Feststellelements 28b gebracht werden, beispielsweise nach einer vorbestimmten Zeit oder einer vorbestimmten Verschiebestrecke. Hierbei wird der Haltebolzen 47 durch Zünden der Treibladung des pyrotechnischen Elements 45 zurückgezogen, wobei das weitere Arretierelement 21 b vom weiteren Feststellelement 28b abgehoben wird. In der weiteren Folge findet nur mehr eine Energieabsorption zwischen dem ersten Feststellelement 28a und dem mit diesem Feststellelement 28a zusammenwirkenden Energieabsorptionsteil 42 statt, wodurch die weitere Verschiebung der Stelleinheit 4 gegenüber der Trageinheit 1 "weicher" wird.

Die erfindungsgemäße Lösung kann ebenso dahin weitergebildet werden, dass ein weiteres Arretierelement 21 b mit einem weiteren Feststellelement 28b erst im Crashfall, beispielsweise nach Ablauf einer bestimmten vorgegebenen Verschiebung des Stelleinheit 4 gegenüber der Trageinheit 1, in Eingriff miteinander gebracht werden. In diesem Fall wird die Verschiebung der Stelleinheit 4 "härter". In einem derartigen Fall ist ein pyrotechnisches Element vorgesehen, dass das Arretierelemente 21 zu einem vorgebbaren Zeitpunkt bzw. Verschiebeweg der Stelleinheit 4 an das korrespondierende Feststellelement 28b herandrückt.

Anstelle eines pyrotechnischen Elements 45 könnte in allen Ausführungsformen auch ein anderer Aktuator vorhanden sein, um das erste Feststellelement 21 b im geschlossenen Zustand des Spannmechanismus 7 außer Eingriff des weiteren Feststellelements 28b zu bringen, beispielsweise ein elektromagnetisch wirkender Aktuator. Auch ein mechanisch wirkendes Teil könnte vorhanden sein, welches das weitere Arretierelement 21 b nach einer vorgegebenen Verschiebestrecke vom weiteren Feststellelement 28b abhebt.

Mittels einer solchen Einrichtung, mit der im Crashfall ein Arretierelement 21b außer Eingriff oder in Eingriff eines zugeordneten Feststellelements 28b bringbar ist, könnte beispielsweise auch eine Anpassung der Energieabsorption an das Gewicht des Fahrers erfolgen.

Es könnten auch mehr als zwei Arretierelemente 21 a, 21 b und mit diesen zusammenwirkende Feststellelemente 28a, 28b vorhanden sein, wobei eine solche Einrichtung zur Steuerung des Eingriffs, die beispielsweise ein pyrotechnisches Element 45 umfasst, auch für mehr als ein Arretierelement vorhanden sein könnte.

Grundsätzlich kann die Ausführung auch so modifiziert werden, dass alle Arretierelemente durch ein entsprechendes Element 45 außer Eingriff bzw. in Eingriff mit den jeweiligen Feststellelementen gebracht werden können. Dadurch können die Vielfalt der Steuermöglichkeiten für die Energieabsorption noch weiter erhöht und das Absorptionsvermögen im Bedarfsfall noch weiter abgesenkt werden.

Die Größe der Energieabsorption könnte auch in der beschriebenen Weise beispielsweise in Abhängigkeit von der Art des Unfalls unterschiedlich eingestellt werden.

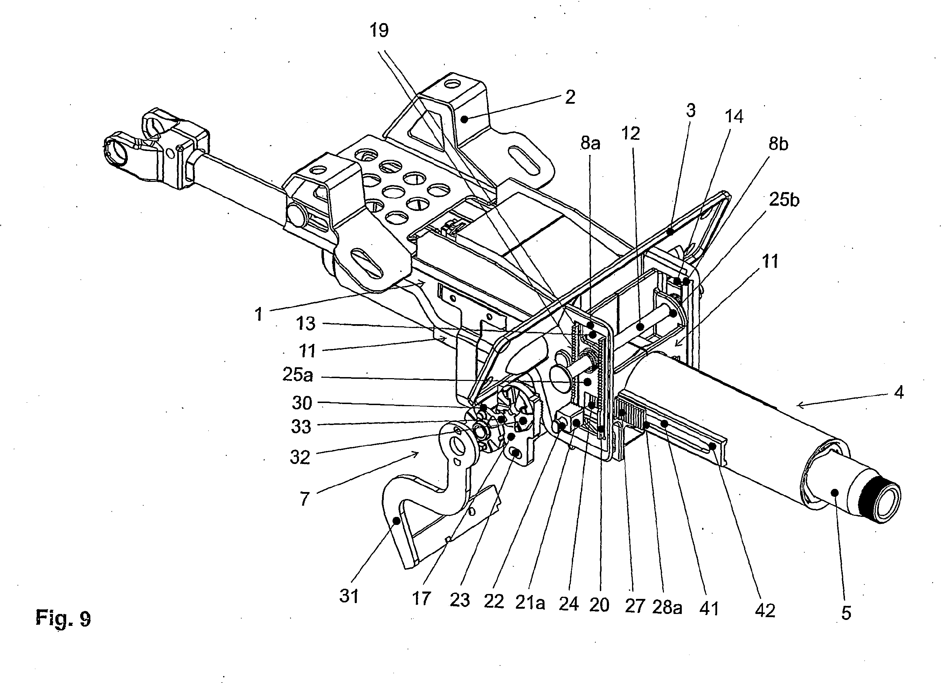

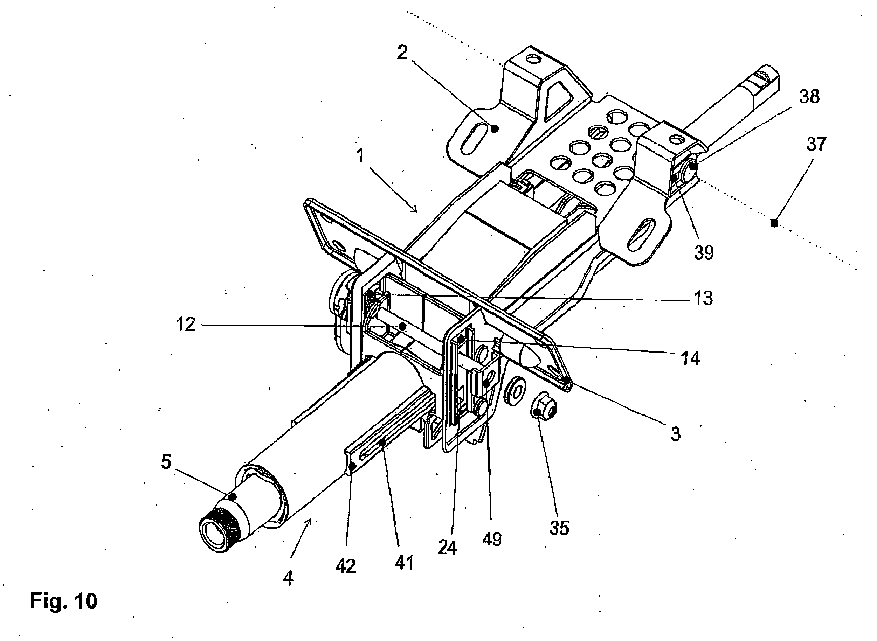

Die Fig. 9 und 10 zeigen eine gegenüber dem zuvor beschriebenen Ausführungsbeispiel etwas vereinfachte Ausführungsform. Der Unterschied besteht darin, dass bei dieser Ausführungsform nur auf einer Seite der Stelleinheit ein Arretierelement 21a und ein Feststellelement 28a vorhanden sind. Auf dieser Seite befinden sich wie zuvor das Höhenarretierelement 17 und das Höhenfeststellelement 20. Auf der gegenüberliegenden Seite ist auf dem Spannbolzen 12 hier anstelle der zuvor beschriebenen Verbindungsplatte 29 lediglich eine Stützplatte 49 angeordnet, welche sich an der Seitenwange 8b der Trageinheit abstützt und an dieser in die Verstellrichtung 10 der Höhen- bzw. Neigungsverstellung verschiebbar geführt ist, und vorzugsweise hierbei verdrehgesichert ist.

In diesem Ausführungsbeispiel ist nur ein erstes Arretierelement 21a und ein Feststellelement 28a vorhanden , und entfällt auch eine Einrichtung, mit der das Arretierelement im Crashfall gegebenenfalls zurückziehbar ist, also beispielsweise das zuvor beschriebene pyrotechnische Element 45.

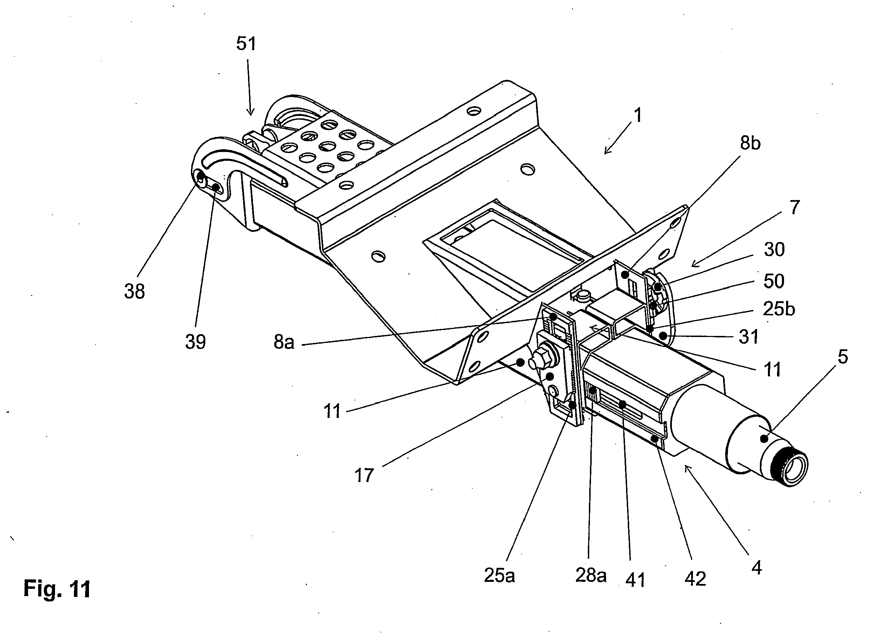

Eine weitere etwas modifizierte Ausführungsform ist in Fig. 11 dargestellt. Die Trageinheit 1 ist hier einteilig ausgebildet. Die Arretierelemente und die zugehörigen Feststellelemente für die Längenverstellung und die Höhenverstellung einerseits und die Spannglieder des Spannmechanismus andererseits sind hier auf gegenüberliegenden Seiten der Stelleinheit 4 angeordnet. Das vom Spannhebel 31 verdrehbare Spannglied 30 wirkt hier somit mit einem die Schräg- bzw. Rampenflächen aufweisenden Spannglied 50 zusammen, welches ein vom Höhenarretierelement 17 unabhängiges Teil ist (während bei den Ausführungsbeispielen gemäß Fig. 1 bis Fig. 10 ein kombiniertes Teil vorhanden war).

Die Zwischeneinheit 11 ist bei diesem Ausführungsbeispiel von der Form her etwas unterschiedlich ausgebildet, erfüllt aber wiederum die gleiche Funktion, d.h. sie lagert die Stelleinheit 4 in die Längsrichtung 9 verschiebbar und ist selbst gegenüber der Trageinheit 1 in die Verstellrichtung 10 verschiebbar gelagert. Die Zwischeneinheit 11 umgibt die Stelleinheit 4 wiederum ringförmig.

Unterschiedliche weitere Modifikationen sind denkbar und möglich, ohne den Bereich der Erfindung zu verlassen. So könnten beispielsweise auch auf beiden Seiten der Stelleinheit 4 miteinander zusammenwirkende Höhenfeststellelemente 17, 20 vorhanden sein.

Eine erfindungsgemäße Lenksäule könnte beispielsweise auch nur in die Längsrichtung 9 verstellbar ausgebildet sein. Bei einer solchen Ausführungsform könnte die Zwischeneinheit 11 entfallen und die Öffnungen 13, 14 in den Seitenwangen 8a, 8b für den Spannbolzen 12 könnten kreisförmig ausgebildet sein. Für das Arretierelement 21a könnte in diesem Fall eine separate Öffnung in der entsprechenden Seitenwange 8a, 8b der Trageinheit 1 vorhanden sein, die das Arretierelement 21a, 21 b in Längsrichtung 9 der Lenksäule unverschiebbar hält. Die Kraftübertragung bei einer im geschlossenen Zustand des Spannmechanismus 7 in Längsrichtung der Lenksäule auf die Stelleinheit 4 wirkendne Kraft würde hierbei vom mindestens einem der Feststellelemente 28a, 28b auf mindestens ein Arretierelement 21 a, 21 b und von diesem über den Rand der Öffnung in der Seitenwange 8a, 8b, welches es durchsetzt, auf die Trageinheit 1 übertragen werden.

Auch für den Fall, dass wie beschrieben eine Zwischeneinheit 11 vorhanden ist, könnte das mindestens eine Arretierelement 21 a, 21 b durch die jeweilige Öffnung in der Seitenwange 8a, 8b in Längsrichtung 9 der Lenksäule unverschiebbar gehalten sein. Die Zwischeneinheit 11 müsste sich dann nicht über den Bereich erstrecken, in welchem das mindestens eine Arretierelement 21 a, 21 b liegt.

Auch ohne eine Zwischeneinheit 11 könnte eine erfindungsgemäße Lenksäule ausgebildet werden, die sowohl in die Längsrichtung 9 als auch in die Höhen- bzw. Neigungsrichtung verstellbar ist. Hierbei könnten in der Stelleinheit 4 vom Spannbolzen 12 durchsetzte Langlöcher vorhanden sein, die sich in die Längsrichtung 9 der Lenksäule erstrecken. Die Stelleinheit 4 könnte zu diesem Zweck mindestens ein nach oben (oder unten) abstehendes, mit dem die Lenkspindel lagernden Mantelrohr starr verbundenes Teil aufweisen, in dem diese Langlöcher angeordnet sind.

Denkbar und möglich wäre es auch, dass die Langlöcher 41 direkt im die Lenkspindel 5 drehbar lagernden Mantelrohr angeordnet sind.

Die in den Ausführungsformen der Erfindung gezeigten Lösungen bieten den Vorteil, dass im Crashfall oder auch in dem Fall, dass sich der Fahrer auf das Lenkrad abstützt nur ein geringer Teil der auftretenden Kräfte in das Spannsystem 7 eingeleitet werden. Dadurch kann die Bedienkraft für das Spannen und Lösen des Spannmechanismus relativ klein ausgelegt werden.

### Legende

### zu den Hinweisziffern:

- 1: Trageinheit
- 2: Konsolenteil
- 3: Konsolenteil
- 4: Stelleinheit
- 5: Lenkspindel
- 6: Ende
- 7: Spannmechanismus
- 8a: Seitenwange
- 8b: Seitenwange
- 9: Längsrichtung
- 10: Verstellrichtung
- 11: Zwischeneinheit
- 12: Spannbolzen
- 13: Öffnung
- 14: Öffnung
- 15: Öffnung
- 16: Öffnung
- 17: Höhenarretierelement
- 18: Verzahnung
- 19: Verzahnung
- 20: Höhenfeststellelement
- 21a: Arretierelement
- 21b: Arretierelement
- 22: Bolzen
- 23: Öffnung
- 24: Öffnung
- 25a: Seitenschenkel
- 25b: Seitenschenkel
- 26: Verzahnung
- 27: Verzahnung
- 28a: Feststellelement
- 28b: Feststellelement
- 29: Verbindungsplatte
- 30: Spannglied
- 31: Spannhebel
- 32: Schrägfläche
- 33: Nockenfortsatz
- 34: Endstück
- 35: Endstück
- 36a: Feder
- 36b: Feder
- 37: Schwenkachse
- 38: Schwenkbolzen
- 39: Langloch
- 40: Bolzen
- 41: Langloch
- 42: Energieabsorptionsteil
- 43: Verbreiterung
- 44: Verbreiterung
- 45: pyrotechnisches Element
- 46: Befestigungsteil
- 47: Haltebolzen
- 48: Bohrung
- 49: Stützplatte
- 50: Spannglied
- 51: Universalgelenk

## Patentansprüche

1. Lenksäule für ein Kraftfahrzeug, die zumindest in ihrer Längsrichtung verstellbar ist, umfassend eine Trageinheit (1), die mit dem Chassis des Kraftfahrzeugs verbindbar ist, eine Stelleinheit (4) und einen Spannmechanismus (7), in dessen geöffnetem Zustand die Stelleinheit (4) gegenüber der Trageinheit (1) zumindest in die Längsrichtung (9) der Lenksäule verstellbar ist und in dessen geschlossenem Zustand die eingestellte Position der Stelleinheit (4) gegenüber der Trageinheit (1) festgestellt ist und der einen Spannbolzen (12) und mindestens ein Arretierelement (21a, 21b), das mit mindestens einem Feststellelement ( 28a, 28b) zusammenwirkt, umfasst, wobei mindestens ein Arretierelement (21 a, 21 b) beim Schließen des Spannmechanismus (7) in achsialer Richtung des Spannbolzens (12) gegenüber der Trageinheit (1) verschoben und durch die Verschiebung in axialer Richtung des Spannbolzens (12) mit einem mit der Stelleinheit (4) verbundenen Feststellelement (28a, 28b) verspannt wird und mindestens ein Feststellelement (28a, 28b) derart mit der Steileinheit (4) verbunden ist, dass es im Normalbetrieb in Längsrichtung der Lenksäule unverschiebbar gegenüber der Stelleinheit (4) gehalten ist und im Crashfall gegenüber der Stelleinheit (4) unter Energieabsorption verschiebbar ist, **dadurch gekennzeichnet, dass** die Trageinheit (1) beidseitig der Stelleinheit (4) liegende Seitenwangen (8a, 8b) aufweist, die vom Spannbolzen (12) durch Öffnungen (13, 14) durchsetzt werden, und mindestens ein Arretierelement (21 a, 21 b) die Seitenwange (8a, 8b) der Trageinheit (1) oder die Seitenwange (8a, 8b) der Trageinheit (1) und einen Seitenschenkel (25a, 25b) einer Zwischeneinheit (11), die zwischen den Seitenwangen (8a, 8b) der Trageinheit (1) und der Stelleinheit (4) angeordnet ist, durch eine Öffnung (13, 14, 24) durchsetzt und von den Rändern der Öffnung (13, 14) der entsprechenden Seitenwange (8a, 8b) der Trageinheit (1) und/oder von den Rändern der Öffnung (24) des entsprechenden Seitenschenkels (25a, 25b) der Zwischeneinheit (11) in Längsrichtung (9) der Lenksäule unverschiebbar gehalten ist.

2. Lenksäule nach Anspruch 1, **dadurch gekennzeichnet, dass** mindestens ein Feststellelement (28a, 28b) mindestens einen auf der zur Stelleinheit (4) gerichteten Seite angebrachten Bolzen (40) aufweist, der in einem Langloch (41) in der Stelleinheit (4) oder in einem an dieser angebrachten Energieabsorptionsteil (42) geführt ist und der dieses Langloch (41) bei einer im Crashfall in Längsrichtung (9) der Lenksäule gegenüber dem Feststellelement (28a, 28b) erfolgenden Verschiebung der Stelleinheit (4) aufweitet.

3. Lenksäule nach Anspruch 1 oder Anspruch 2, **dadurch gekennzeichnet, dass** mindestens ein Arretierelement (21 a, 21 b) und ein Feststellelement (28a, 28b) im geschlossenen Zustand des Spannmechanismus (7) formschlüssig ineinander eingreifen, vorzugsweise ineinander eingreifende Verzahnungen (26, 27) aufweisen.

4. Lenksäule nach einem der Ansprüche 1 bis 3, **dadurch gekennzeichnet, dass** die Lenksäule auch in der Höhe bzw. Neigung verstellbar ist, wobei zur Feststellung der eingestellten Position der Stelleinheit (4) in diese Verstellrichtung (10) beim Schließen des Spannmechanismus (7) mindestens ein Höhenarretierelement (17) in achsialer Richtung des Spannbolzens (12) verschoben und mit einem mit der Trageinheit (1) verbundenen Höhenfeststellelement (20) verspannt wird.

5. Lenksäule nach Anspruch 4, **dadurch gekennzeichnet, dass** das Höhenarretierelement (17) und das Höhenfeststellelemente (20) im geschlossenen Zustand des Spannmechanismus (7) formschlüssig ineinander eingreifen, vorzugsweise ineinander eingreifende Verzahnungen (18, 19) aufweisen.

6. Lenksäule nach Anspruch 4 oder Anspruch 5, **dadurch gekennzeichnet, dass** in Richtung der Höhen- bzw. Neigungsverstellung die Zwischeneinheit (11) verschiebbar gegenüber der Trageinheit (1) geführt und unverschiebbar gegenüber der Stelleinheit (4) gehalten ist und die Stelleinheit (4) in Längsrichtung (9) der Lenksäule verschiebbar in der Zwischeneinheit (11) geführt ist und die Zwischeneinheit (11) in Längsrichtung (9) der Lenksäule unverschiebbar gegenüber der Trageinheit (1) gehalten ist.

7. Lenksäule nach einem der Ansprüche 1 bis 6, **dadurch gekennzeichnet, dass** das mindestens ein Feststellelement (28a, 28b) mit der die Lenkspindel (5) drehbar lagernden Stelleinheit (4) im Bereich einer Ebene verbunden ist, die durch die Längsachse der Lenkspindel (5) verläuft und rechtwinklig zu einer durch die Längsachse der Lenkspindel (5) verlaufenden Vertikalebene steht.

8. Lenksäule nach einem der Ansprüche 1 bis 7, **dadurch gekennzeichnet, dass** das mindestens ein Arretierelement (21a, 21b) als Ganzes auf einer Seite neben dem Spannbolzen (12) angeordnet ist.

9. Lenksäule nach Anspruch 8, **dadurch gekennzeichnet, dass** mindestens ein Arretierelement (21a, 21b) an einem Höhenarretierelement (17) festgelegt ist.

10. Lenksäule nach einem der Ansprüche 1 bis 9, **dadurch gekennzeichnet, dass** eine Einrichtung vorhanden ist, mittels der mindestens ein Arretierelement (21a, 21 b), vorzugsweise im Crashfall nach einer vorbestimmten Zeit oder einer vorbestimmten Verschiebestrecke, im geschlossenen Zustand des Spannmechanismus (7) außer Eingriff des zugeordneten Feststellelements (28a, 28b) bringbar ist.

11. Lenksäule nach Anspruch 10, **dadurch gekennzeichnet, dass** die Einrichtung ein pyrotechnisches Element (45) zum Zurückziehen des Arretierelements (21a, 21b) umfasst.

12. Lenksäule nach einem der Ansprüche 1 bis 11, **dadurch gekennzeichnet, dass** auf beiden Seiten der Stelleinheit (4) jeweils mindestens ein Arretierelement (21 a, 21 b) und ein Feststellelement (28a, 28b) vorhanden sind.

13. Lenksäule nach einem der Ansprüche 1 bis 11, **dadurch gekennzeichnet, dass** die Höhenverstellung um eine Schwenkachse (37) erfolgt, die durch einen Schwenkbolzen (38) gebildet wird, der an der Zwischeneinheit (11) festgelegt ist und in der Trageinheit zumindest drehbar gelagert ist.

14. Lenksäule nach Anspruch 13 **dadurch gekennzeichnet, dass** die Schwenkachse (37) im Falle eines Crashs entlang mindestens eines Langlochs (39), das an der Trageinheit (2) angeordnet ist, verschiebbar angeordnet ist.

15. Lenksäule nach Anspruch 14 **dadurch gekennzeichnet, dass** die Verschiebung der Schwenkachse (37) im Falle eines Crashs entlang des Langlochs (39) unter Energieabsorption erfolgt.

## Claims

1. A motor-vehicle steering column adjustable at least in its longitudinal direction, comprising a supporting unit (1) connectable to the chassis of the motor vehicle, an adjusting unit (4) and a clamping mechanism (7) in whose opened state the adjusting unit (4) is adjustable with respect to the supporting unit (1) in at least the longitudinal direction (9) of the steering column and in whose closed state the adjusted position of the adjusting unit (4) with respect to the supporting unit (1) is secured and which comprises a clamping bolt (12) and at least one arresting element (21 a, 21 b) cooperating with at least one securing element (28a, 28b), wherein at least one arresting element (21 a, 21 b) is displaced in the axial direction of the clamping bolt (12) with respect to the supporting unit (1) upon closing of the clamping mechanism (7) and is clamped to a securing element (28a, 28b), connected to the adjusting unit (4), by the displacement in the axial direction of the clamping bolt (12) and at least one securing element (28a, 28b) is connected to the adjusting unit (4) in such a manner that in normal operation it is held so as to be non-displaceable in the longitudinal direction of the steering column with respect to the adjusting unit (4) and in the event of a crash it is displaceable with respect to the adjusting unit (4) accompanied by energy absorption, **characterised in that** the supporting unit (1) has lateral cheeks (8a, 8b) lying to either side of the adjusting unit (4), the clamping bolt (12) passing through openings (13, 14) in the lateral cheeks (8a, 8b), and at least one arresting element (21 a, 21 b) passes, by means of an opening (13, 14, 24), through the lateral cheek (8a, 8b) of the supporting unit (1) or the lateral cheek (8a, 8b) of the supporting unit (1) and a lateral limb (25a, 25b) of an intermediate unit (11) arranged between the lateral cheeks (8a, 8b) of the supporting unit (1) and the adjusting unit (4) and is held so as to be non-displaceable in the longitudinal direction (9) of the steering column by the edges of the opening (13, 14) of the respective lateral cheek (8a, 8b) of the supporting unit (1) and/or by the edges of the opening (24) of the respective lateral cheek (25a, 25b) of the intermediate unit (11).

2. A steering column according to claim 1, **characterised in that** at least one securing element (28a, 28b) has at least one bolt (40) attached at the side directed towards the adjusting unit (4), which bolt (40) is guided in an elongated hole (41) in the adjusting unit (4) or in an energy absorption part (42) attached to the latter and expands this elongated hole (41) upon displacement of the adjusting unit (4) in the longitudinal direction (9) of the steering column with respect to the securing element (28a, 28b) in the event of a crash.

3. A steering column according to claim 1 or claim 2, **characterised in that** at least one arresting element (21 a, 21b) and a securing element (28a, 28b) engage one another in a positive-locking manner in the closed state of the clamping mechanism (7), preferably have meshing toothing (26, 27).

4. A steering column according to any one of claims 1 to 3, **characterised in that** the height or inclination of the steering column is also adjustable, wherein to secure the adjusted position of the adjusting unit (4) in this adjustment direction (10), upon closing of the clamping mechanism (7) at least one height arresting element (17) is displaced in the axial direction of the clamping bolt (12) and is clamped to a height securing element (20) connected to the supporting unit (1).

5. A steering column according to claim 4, **characterised in that** the height arresting element (17) and the height securing elements (20) engage one another in a positive-locking manner in the closed state of the clamping mechanism (7), preferably have meshing toothing (18, 19).

6. A steering column according to claim 4 or claim 5, **characterised in that** in the direction of the height or inclination adjustment, the intermediate unit (11) is displaceably guided with respect to the supporting unit (1) and is held so as to be non-displaceable with respect to the adjusting unit (4), and the adjusting unit (4) is displaceably guided in the intermediate unit (11) in the longitudinal direction (9) of the steering column and the intermediate unit (11) is held so as to be non-displaceable with respect to the supporting unit (1) in the longitudinal direction (9) of the steering column.

7. A steering column according to any one of claims 1 to 6, **characterised in that** the at least one securing element (28a, 28b) is connected to the adjusting unit (4), rotatably supporting the steering spindle (5), in the region of a plane which runs through the longitudinal axis of the steering spindle (5) and is at right angles to a vertical plane running through the longitudinal axis of the steering spindle (5).

8. A steering column according to any one of claims 1 to 7, **characterised in that** the at least one arresting element (21 a, 21 b) as a whole is arranged at one side, adjacent the clamping bolt (12).

9. A steering column according to claim 8, **characterised in that** at least one arresting element (21 a, 21 b) is secured in position on a height arresting element (17).

10. A steering column according to any one of claims 1 to 9, **characterised in that** a device is present by means of which at least one arresting element (21 a, 21 b) can be disengaged from the associated securing element (28a, 28b) in the closed state of the clamping mechanism (7), preferably after a predetermined time or a predetermined displacement distance in the event of a crash.

11. A steering column according to claim 10, **characterised in that** the device comprises a pyrotechnic element (45) for withdrawal of the arresting element (21 a, 21 b).

12. A steering column according to any one of claims 1 to 11, **characterised in that** in each case at least one arresting element (21 a, 21 b) and a securing element (28a, 28b) are present on either side of the adjusting unit (4).

13. A steering column according to any one of claims 1 to 11, **characterised in that** the height adjustment takes place about a pivot axis (37) formed by a swivel pin (38) which is secured in position on the intermediate unit (11) and which is at least rotatably mounted in the supporting unit.

14. A steering column according to claim 13, **characterised in that** the pivot axis (37) is arranged so as to be displaceable in the event of a crash along at least one elongated hole (39) arranged in the supporting unit (2).

15. A steering column according to claim 14, **characterised in that** the displacement of the pivot axis (37) along the elongated hole (39) in the event of a crash takes place accompanied by energy absorption.

## Revendications

1. Colonne de direction de véhicule automobile, réglable au moins dans sa direction longitudinale et comprenant :
- une unité de support (1) destinée à être reliée au châssis du véhicule automobile,
- une unité de réglage (4), et
- un mécanisme de serrage (7) permettant,
* en position ouverte, à l'unité de réglage (4) de régler la colonne de direction par rapport à l'unité de support (1) au moins dans la direction longitudinale (9) et
* en position fermée de bloquer la position réglée de l'unité de réglage (4) par rapport à l'unité de support (1),
* et qui comprend un goujon de serrage (12) et au moins un élément de blocage (21a, 21b) coopérant avec au moins un élément de fixation (28a, 28b), et
- à la fermeture du mécanisme de serrage (7), au moins un élément de blocage (21a, 21b) est déplacé dans la direction axiale du goujon de serrage (12) par rapport à l'unité de support (1), et il est serré par le coulissement en direction axiale du goujon de serrage (12) avec un élément de fixation (28a, 28b) relié à l'unité de réglage (4), et
- au moins un élément de fixation (28a, 28b) est relié à l'unité de réglage (4) pour qu'en mode de fonctionnement normal, la colonne de direction soit tenue bloquée dans la direction longitudinale par rapport à l'unité de réglage (4) et qu'en cas de collision, elle puisse coulisser par rapport à l'unité de réglage (4) avec absorption d'énergie,
**caractérisée en ce que**
- l'unité de support (1) comporte des flasques (8a, 8b) situés de part et d'autre de l'unité de réglage (4), ces flasques étant traversés par le goujon de serrage (12) passant par des orifices (13, 14), et
- au moins un élément de blocage (21a, 21b) traverse un orifice (13, 14, 24) des flasques (8a, 8b) de l'unité de support (1) ou les flasques (8a, 8b) de l'unité de support (1), et une branche latérale (25a, 25b) d'une unité intermédiaire (11) installée entre les flasques (8a, 8b) de l'unité de support (1) et l'unité de réglage (4), et cet élément est tenu par les bords de l'orifice (13, 14) des flasques (8a, 8b) correspondantes de l'unité de support (1) et/ou les bords de l'orifice (24) de la branche latérale correspondante (25a, 25b) de l'unité intermédiaire (11), de manière bloquée dans la direction longitudinale (9) de la colonne de direction.

2. Colonne de direction selon la revendication 1,
**caractérisée en ce qu'**
au moins un élément de fixation (28a, 28b) comporte au moins un goujon (40) tourné vers le côté dirigé vers l'unité de réglage (4), ce goujon étant guidé dans un trou oblong (41) de l'unité de réglage (4) ou dans une pièce absorbant de l'énergie (42) portée par cette unité de réglage et qui élargit ce trou oblong (41) en cas de collision dans la direction longitudinale (9) de la colonne de direction, par le coulissement de l'unité de réglage (4) par rapport à l'élément de blocage (28a, 28b).

3. Colonne de direction selon la revendication 1 ou 2,
**caractérisée en ce qu'**
au moins un élément de blocage (21a, 21b) et un élément de fixation (28a, 28b) s'interpénètrent par une liaison par la forme lorsque le mécanisme de serrage (7) est en position fermée, et cette interpénétration se fait de préférence par des dentures (26, 27) qui s'interpénètrent.

4. Colonne de direction selon les revendications 1 à 3,
**caractérisée en ce qu'**
elle est réglable en hauteur ou en inclinaison et pour bloquer la position réglée de l'unité de réglage (4) dans cette direction de réglage (10), à la fermeture du mécanisme de serrage (7), on déplace au moins un élément de blocage en hauteur (17) dans la direction axiale du goujon de serrage (12) et on serre à l'aide d'un élément de fixation en hauteur (20) relié à l'unité de support (1).

5. Colonne de direction selon la revendication 4,
**caractérisée en ce que**
l'élément de blocage en hauteur (17) et l'élément de fixation en hauteur (20), à l'état fermé du mécanisme de serrage (7) s'interpénètrent par une liaison par la forme en ayant de préférence des dentures (18, 19) qui s'interpénètrent.

6. Colonne de direction selon la revendication 4 ou 5,
**caractérisée en ce que**
dans la direction du réglage en hauteur ou en inclinaison, l'unité intermédiaire (11) peut coulisser par rapport à l'unité de support (1) et elle est tenue de manière bloquée vis-à-vis de l'unité de réglage (4), et cette unité de réglage (4) est coulissante dans la direction longitudinale (9) de la colonne de guidage, dans l'unité intermédiaire (11) et cette unité intermédiaire (11) est tenue dans la direction longitudinale (9) de la colonne de direction, de manière non coulissante par rapport à l'unité de support (1).

7. Colonne de direction selon les revendications 1 à 6,
**caractérisée par**
au moins un élément de fixation (28a, 28b) relié à l'unité de réglage (4) recevant en rotation la broche de direction (5), dans la zone de plan passant par l'axe longitudinal de la broche de guidage (5) et perpendiculairement à un plan vertical passant par l'axe longitudinal de la broche de direction (5).

8. Colonne de direction selon les revendications 1 à 7,
**caractérisée par**
au moins un élément de blocage (21a, 21b) installé en tant que tel sur un côté, jouxtant le goujon de serrage (12).

9. Colonne de direction selon la revendication 8,
**caractérisée en ce que**
l'élément de blocage (21a, 21b) est fixé à un élément (17) se bloquant en hauteur.

10. Colonne de direction selon les revendications 1 à 9,
**caractérisée par**
une installation à l'aide de laquelle, au moins un élément de blocage (21a, 21b) est mis hors de prise de l'élément de fixation (28a, 28b) correspondant, de préférence en cas de collision, après un certain temps ou un certain trajet, lorsque le mécanisme de serrage (7) est fermé.

11. Colonne de direction selon la revendication 10,
**caractérisée en ce que**
l'installation comporte un élément pyrotechnique (45) pour rappeler l'élément de blocage (21a, 21b).

12. Colonne de direction selon les revendications 1 à 11,
**caractérisée par**
au moins un élément de blocage (21a, 21b) sur les deux côtés de l'unité de réglage (4) ainsi qu'un élément de fixation (28a, 28b).

13. Colonne de direction selon les revendications 1 à 11,
**caractérisée en ce que**
le réglage en hauteur se fait autour d'un axe de pivotement (37) formé par un goujon de pivotement (38) fixé à l'unité intermédiaire (11) et monté à rotation au moins dans l'unité de support.

14. Colonne de direction selon la revendication 13,
**caractérisée en ce qu'**
en cas de collision, l'axe de pivotement (37) coulisse le long d'au moins un trou oblong (39) réalisé dans l'unité de support (2).

15. Colonne de direction selon la revendication 14,
**caractérisée en ce que**
le coulissement de l'axe de pivotement (37), se fait le long du trou oblong (39) avec absorption d'énergie, en cas de collision.
